# EUROPEAN PATENT APPLICATION

(11) **EP 1 695 853 A2**
(43) Date of publication of application: **30.08.2006**
(21) Application number: 06003838.7
(22) Date of filing: 24.02.2006
(51) Int. Cl.: B60J 7/12, B62D 65/00

(54) **Fabric joining structure for convertible vehicle top**

(30) Priority: 25.02.2005 JP 2005050198
(71) Applicant: Mazda Motor Corporation, Aki-gun, Hiroshima (JP); Toyo Seat Co., Ltd., Osaka-shi, Osaka (JP)
(72) Inventor: Tanoue, Hiroki, Aki-gun Hiroshima (JP); Miyake, Haruo, Aki-gun Hiroshima (JP); Okamura, Chikaaki, Aki-gun Hiroshima (JP)
(74) Representative: Lorenz, Eduard

(57) **Abstract**

Disclosed is a joining structure between a top fabric 3 and a window glass 4 in a convertible vehicle top, which comprises a folded portion 32 formed by folding back a peripheral edge 3a of a window opening 7 of the top fabric 3 on an inner surface of an external portion 31 of the top fabric 3 and provided with a plurality of cutouts 5 formed along an edge 32a thereof, and an adhesive layer 8 interposed between the window glass 4 and the top fabric 3 having the folded portion 32 disposed to overlap with a peripheral edge 4a of the window glass 4, in such a manner as to extend from a region where the folded portion 32 and the window glass 4 are located in opposed relation to one another to a region where the external portion 31 and the window glass 4 are located in opposed relation to one another. The joining structure of the present invention can increase an opposed area between the external portion 31 and the window glass 4 despite of interposition of the folded portion 32, to provide enhanced joining strength and peeling resistance in the joined region. This makes it possible to prevent occurrence of peeling in laminated layers of the folded portion 32 so as to maintain a joining strength between the top fabric 3 and the window glass 4 at a high level and provide enhanced reliability of the joined region.

## Description

### BACKGROUND OF THE INVENTION

### TECHNICAL FIELD

The present invention relates to a joining structure between a top fabric and a window glass in a convertible vehicle top.

### DESCRIPTION OF THE RELATED ART

Generally, in a convertible vehicle top, a window glass is provided to a rear surface of the fabric top to ensure rearward visibility. In this case, the window glass is attached to a window opening formed by partly cutting out a top fabric. That is, the window glass or a hard material is joined to the top fabric or a soft material, and this joining structure involves a problem about difficulty in obtaining a strong joining strength as compared with a joining structure between two hard materials or between two soft materials. As measures against this problem, various joining structures have been proposed. Among them, as one example of simplified and low-cost joining structures, Japanese Patent Laid-Open Publication No. 2001-294045 (Patent Publication 1) discloses the following structure.

As shown in FIG. 5, in the joining structure disclosed in the Patent Publication 1, a peripheral edge 52a of a top fabric 52 is folded back on an inner surface of the fabric, and then the folded portion 54 and a window glass 51 are joined together using an adhesive 55 which is applied in such a manner as to wrap the folded portion 54 superimposed on an outside fabric portion 53 and interpose between the folded portion 54 and the window glass 51.

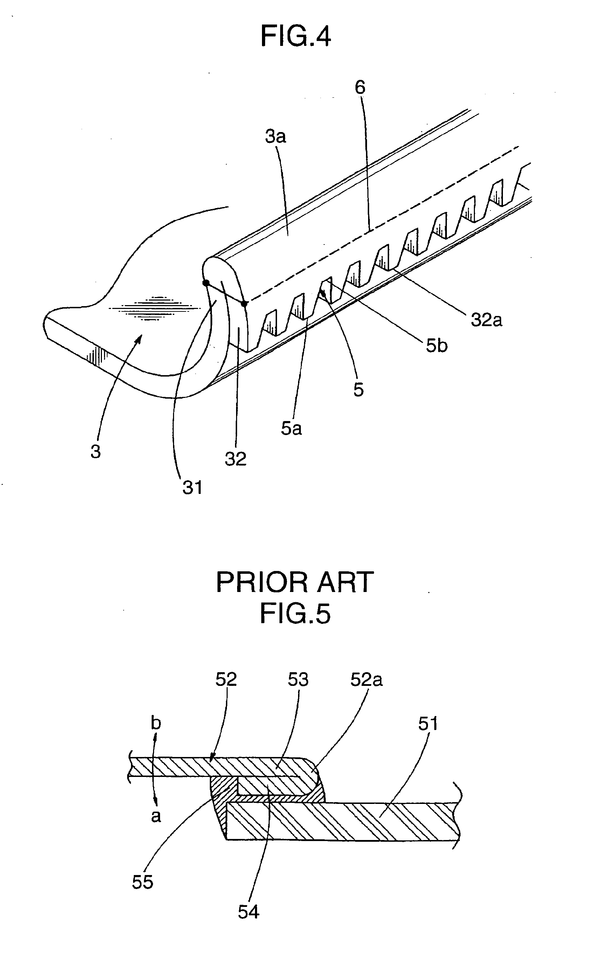

While the above joining structure designed to fold back the peripheral edge 52a of the top fabric 52 and adhesively join the folded portion 54 to the window glass 51 can assure a relatively large joining surface between the window glass 51 and the folded portion 54 opposed directly to the window glass 51, a joining surface between the window glass 51 and the outside fabric portion 53 is limited to only a small area due to the folded portion 54 existing therebetween. This inevitably causes deterioration in joining strength. Thus, every time the top fabric 52 is bent during operations deploying and retracting the fabric top, a certain load is repeatedly imposed on the outside fabric portion 53 in directions approximately perpendicular to upper and lower surfaces of the fabric (directions indicated by the arrows "a" and "b" in FIG. 5). This load is likely to cause peeling between the outside fabric arrows "a" and "b" in FIG. 5). This load is likely to cause peeling between the outside fabric portion 53 and the window glass 51, and this peeling will exert an adverse affect on a joining strength between the folded portion 54 and the window glass 51.

More specifically, the top fabric is typically formed of a laminated fabric. Thus, if laminated inner layers in the folded portion 54 are peeled from each other, the strength of the folded portion 54 is lowered, and the lowered strength is likely to lead to deterioration in the joining strength between the folded portion 54 and the window glass 51. As above, the conventional joining structure involves a problem in terms of reliability.

### SUMMARY OF THE INVENTION

In view of the above problem, it is therefore an object of the present invention to provide a top fabric joining structure for a convertible vehicle top designed to fold back a peripheral edge of a top fabric and join the folded portion to a window glass, capable of obtaining enhanced joining strength in a simplified and low-cost structure.

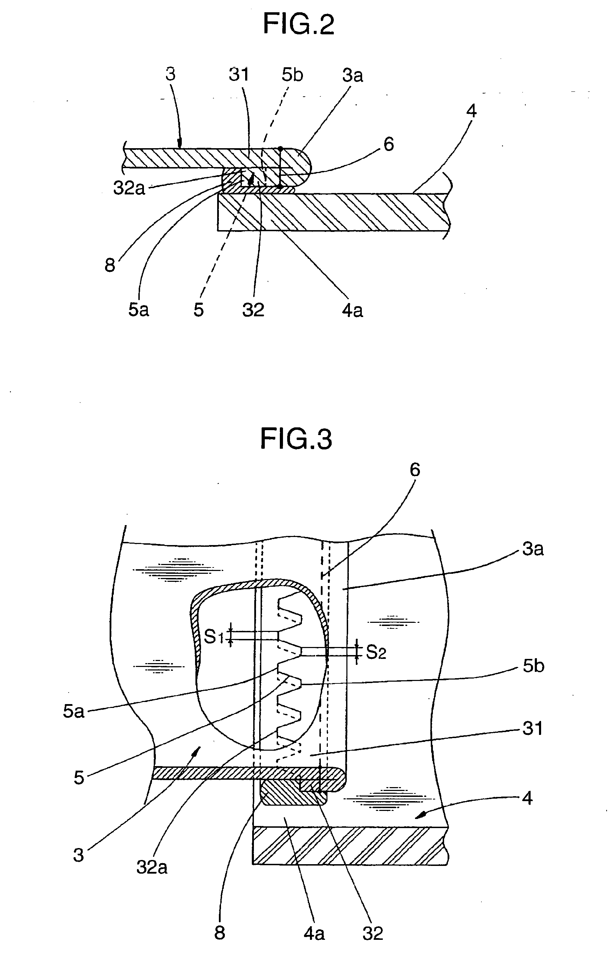

In order to achieve the above object, the present invention provides a joining structure between a top fabric 3 of a convertible vehicle top 2 and a window glass 4 attached to a window opening 7 formed in the top fabric 3. The joining structure comprises a folded portion 32 formed by folding back a peripheral edge 3 a of the window opening 7 of the top fabric 3 toward an inner surface of the top fabric 3, and superimposed on an inner surface of an external portion 31 of the top fabric 3. It should be noted that the word "exterior" is used in the term "an exterior portion 31 ", the term "exterior portion 31" in this specification is meant to include not only an outer surface (an external top surface of the fabric 3 that can be seen from externally: see Fig. 2) but also an inner surface (a bottom surface of the fabric 3: see Fig. 2) unless otherwise specifically indicated. The folded portion 32 has a plurality of cutouts 5 formed along an edge 32a thereof to extend from the edge 32a toward the inside thereof. The joining structure further includes an adhesive layer 8 interposed between the window glass 4 and the top fabric 3 having the folded portion 32 disposed to overlap with a peripheral edge 4a of the window glass 4, in such a manner as to extend from a region where the folded portion 32 and the window glass 4 are located in opposed relation to one another to a region where the external portion 31 and the window glass 4 are located in opposed relation to one another.

In the above joining structure of the present invention, the plurality of cutouts 5 are formed along the edge 32a of the folded portion 32. Thus the folded portion 32 is interposed between the external portion 31 and the window glass 4; however, an opposed area between the external portion 31 and the window glass 4 can be increased. This allows the external portion 31 and the window glass 4 to be strongly bonded together through the adhesive layer 8 interposed in the opposed region thereof so as to provide enhanced peeling resistance. While an opposed area between the folded portion 32 and the window glass 4 is reduced due to the formation of the cutouts 5, this opposed area is greater than opposed area between the external portion 31 and the window glass 4, and therefore a sufficient joining strength can be ensured through the adhesive layer 8.

Further, the enhanced peeling resistance between the external portion 31 and the window glass 4 maximally prevents occurrence of peeling in laminated layers of the folded portion 32. This makes it possible to maintain a joining strength between the top fabric 3 and the window glass 4 at a high level so as to provide enhanced reliability of the joined region. This joining structure can be expected to contribute to improvement in a commercial value of the convertible vehicle top itself.

In addition, the above enhanced joining strength can be achieved based on a simplified and low-cost structure designed to form the cutouts 5 in the folded portion 32. This makes it possible to obtain a highly-reliable convertible vehicle top at a low cost and or in a significantly economical manner.

### BRIEF DESCRIPTION OF DRAWINGS

FIG. 1 is a perspective view generally showing a convertible vehicle equipped with a fabric top having a joining structure according to one embodiment of the present invention
FIG. 2 is an enlarged sectional view taken along the line II-II in FIG. 1.
FIG. 3 is a perspective view showing the joining structure in FIG. 2.
FIG. 4 is a perspective view showing the structure of a top fabric in the fabric top.
FIG. 5 is a sectional view showing a conventional joining structure.

### DETAILED DESCRIPTION OF THE INVENTION

The present invention will now be specifically described based on a preferred embodiment thereof.

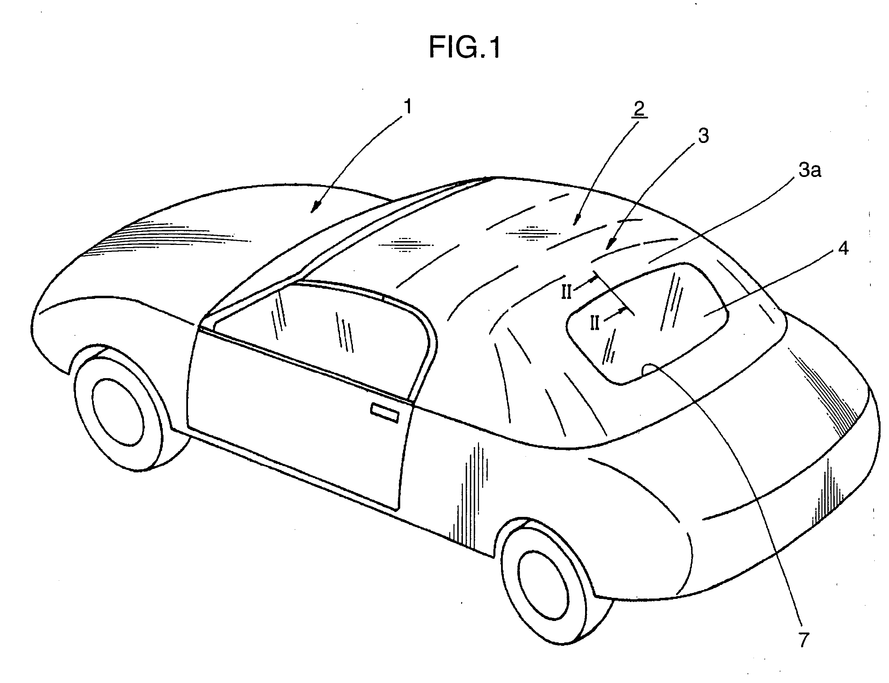

FIG. 1 shows a convertible vehicle equipped with a deployable/retractable top 2 attached to an opening of a passenger compartment in a vehicle body 1. The convertible vehicle top 2 comprises a top fabric 3 and a window glass 4 attached to a window opening 7 formed in a rear surface of the top fabric 3. In view of preventing rainwater or the like from getting into the passenger compartment, a joined region between the window glass 4 and the top fabric 5 is required to have high reliability. In addition, during operations for deploying and retracting the top fabric 3, a peeling force is repeatedly applied to the joined region every time the top fabric 3 is bent. Thus, the joined region is also required to have a high joining strength sufficient to resist the peeling force.

From these standpoints, the top fabric 3 and the window glass 4 are joined together using a joining structure according to one embodiment of the present invention, to fulfill the above requirements. This joining structure will be specifically described below with reference to FIGS. 2 to 4.

The joining structure according to this embodiment is based on the aforementioned simplified and low-cost structure or a structure where a peripheral edge 3a of the window opening 7 of the top fabric 3 is folded back on an inner surface of the fabric, and then the folded portion is bonded onto the window glass 4 using an adhesive 8. Based on this fundamental structure, the joining structure according to this embodiment is designed to maintain a joining strength at a high level so as to provide enhanced reliability in the joined region.

As shown in FIGS. 2 and 4, the peripheral edge 3 a the top fabric 3 is folded back toward the inner surface of the top fabric 3, and the resulting folded portion 32 is superimposed on an inner surface of an exterior portion 31 defining an exterior surface of the top fabric 3. It should be noted that the word "exterior" is used in the term "an exterior portion 31 ", the term "exterior portion 31" in this specification is meant to include both an outer surface (a top surface of the fabric 3 that can be seen from externally: see Fig. 2) and an inner surface (a bottom surface of the fabric 3: see Fig. 2). The folded portion 32 has a plurality of approximately trapezoidal-shaped cutouts 5 formed along an edge 32a thereof in spaced apart relation to each other (i.e. in an intermittent or discontinuous pattern), and the external portion 31 and the folded portion superimposed on one another are sewn together.

Then, a peripheral edge 4a of the window glass 4 is disposed in opposed relation to the folded portion 32 formed at the peripheral edge 3a the top fabric 3, and the folded portion 32 is joined to the peripheral edge 4a of the window glass 4 using the adhesive 8 applied therebetween. In this embodiment, the adhesive 8 is applied to form an adhesive layer, which extends over a relatively wide range from an opposed region between the folded portion 32 of the top fabric 3 and the window glass 4, to an opposed region between the external portion 31 and the window glass 4.

When the folded portion 32 of the top fabric 3 and the window glass 4 are joined together using the adhesive 8 in the above manner, the cutouts 7 also provide face-to-face relation between the external portion 31 and the window glass 4 therethrough, and allow them to be joined together directly therethrough using the adhesive 8. Thus, a joining area between the external portion 31 and the window glass 4 is increased, for example, as compared to the conventional joining structure without the cutouts 5.

This allows the external portion 31 and the window glass 4 to be strongly joined together, and the obtained joined region can have drastically enhanced peeling resistance.

While an opposed area between the folded portion 32 and the window glass 4 is reduced due to the formation of the cutouts 5, this opposed area is far greater than opposed area between the external portion 31 and the window glass 4, and therefore a sufficient joining strength can be ensured through the adhesive layer 8.

The enhanced peeling resistance between the external portion 31 and the window glass 4 maximally prevents occurrence of peeling in laminated layers of the folded portion 32. These synergistic effects make it possible to maintain a joining strength between the top fabric 3 and the window glass 4 at a high level so as to provide enhanced reliability of the joined region. Thus, this joining structure contributes to improvement in a commercial value of the convertible vehicle top itself.

In addition, the above enhanced joining strength can be achieved based on a simplified and low-cost structure designed to form the cutouts 5 in the folded portion 32. This makes it possible to obtain a highly-reliable convertible vehicle top at a low cost and or in a significantly economical manner.

In this embodiment, the plurality of cutouts 5 are formed along an edge 32a of the folded portion 32 in spaced apart relation to each other (i.e. in an intermittent or discontinuous pattern). Specifically, as shown in FIG. 3, a plurality of linear portions 5a each having a width S1 are formed at the edge 32a. Thus, the edge 32a of the folded portion 32 can be joined with enhanced joining strength using the adhesive 8, for example, as compared with a plurality of cutouts which are formed along the edge 32a continuously without a space therebetween or in such a manner that form a plurality of sharp tip-shaped portions at the edge 32a. Further, each of the cutouts 5 is formed in a trapezoidal shape. That is, the cutout 5 has a bottom formed as a linear portion 5a having a width S2. This also contributes to increase in joining strength. Thus, these cutouts 5 make it possible to further effectively prevent occurrence of peeling in laminated layers of the folded portion 32, and further increase the joining strength between the top fabric 3 and the window glass 4.

In this embodiment, the external portion 31 and the folded portion 32 are sewn together as indicated by the sewn line 6 in FIG. 3. This makes it possible to prevent the external portion 31 and the folded portion 32 superimposed on one another from unfolding or being displaced in an in-plane direction, so as to reliably provide enhanced joining strength between the top fabric 3 and the window glass 4.

While each of the cutouts 5 in the above embodiment is formed in a trapezoidal shape, the joining structure of the present invention is not limited thereto. For example, in place of a trapezoidal shape, the cutouts may be formed in any other suitable shape or pattern, such as wave shape or pattern.

As mentioned above, the present invention provides a joining structure between a top fabric 3 of a convertible vehicle top 2 and a window glass 4 attached to a window opening 7 formed in the top fabric 3. The joining structure comprises a folded portion 32 formed by folding back a peripheral edge 3a of the window opening 7 of the top fabric 3 toward an inner surface of the top fabric 3, and superimposed on an inner surface of an external portion 31 of the top fabric 3. The folded portion 32 has a plurality of cutouts 5 formed along an edge 32a thereof to extend from the edge 32a toward the inside thereof. The joining structure further includes an adhesive layer 8 interposed between the window glass 4 and the top fabric 3 having the folded portion 32 disposed to overlap with a peripheral edge 4a of the window glass 4, in such a manner as to extend over a range from a region where the folded portion 32 and the window glass 4 are located in opposed relation to one another, to a region where the external portion 31 and the window glass 4 are located in opposed relation to one another.

In the above joining structure of the present invention, the plurality of cutouts 5 are formed along the edge 32a of the folded portion 32. Thus, even though the folded portion 32 is interposed between the external portion 31 and the window glass 4, an opposed area between the external portion 31 and the window glass 4 can be increased. This allows the external portion 31 and the window glass 4 to be strongly bonded together through the adhesive layer 8 interposed in the opposed region thereof so as to provide enhanced peeling resistance. While an opposed area between the folded portion 32 and the window glass 4 is reduced due to the formation of the cutouts 5, this opposed area is far greater than opposed area between the external portion 31 and the window glass 4, and therefore a sufficient joining strength can be ensured through the adhesive layer 8.

In the joining structure of the present invention, it is preferable that the plurality of cutouts 5 are formed along the edge 32a of the folded portion 32 in spaced apart relation to each other.

In this case, a plurality of linear portions 5a are formed at the edge 32a. Thus, the edge 32a of the folded portion 32 can be joined with enhanced joining strength through the adhesive layer 8, for example, as compared with a plurality of cutouts which are formed along the edge 32a continuously without a space therebetween or in such a manner that form a plurality of sharp tip-shaped portions at the edge 32a. This makes it possible to further effectively prevent occurrence of peeling in laminated layers of the folded portion 32 so as to allow the above effect to be further accelerated.

In the joining structure of the present invention, it is preferable that the external portion 31 and the folded portion 32 are sewn together. The external portion 31 and the folded portion 32 sewn together make it possible to prevent the external portion 31 and the folded portion 32 superimposed on one another from unfolding or being displaced in an in-plane direction, so as to allow the above effect to be further reliably obtained.

Although the present invention has been fully described by way of example with reference to the accompanied drawings, it is to be understood that various changes and modifications will be apparent to those skilled in the art. Therefore, unless otherwise such changes and modifications depart from the scope of the present invention hereinafter defined, they should be construed as being included therein.

## Claims

1. A joining structure between a top fabric (3) of a convertible vehicle top (2) and a window glass (4) attached to a window opening (7) formed in said top fabric (3), comprising:
a folded portion (32) formed by folding back a peripheral edge (3a) of said window opening (7) of said top fabric (3) toward an inner surface of said top fabric (3), and superimposed on an inner surface of an exterior portion (31) of said top fabric (3), said folded portion (32) having a plurality of cutouts (5) formed along an edge (32a) thereof; and
an adhesive layer (8) interposed between said window glass (4) and said top fabric (3) having said folded portion (32) disposed to overlap with a peripheral edge (4a) of said window glass (4), in such a manner as to extend from a region where said folded portion (32) and said window glass (4) are opposed to each other to a region where said exterior portion (31) and said window glass (4) are opposed to each other.

2. The joining structure as defined in claim 1, wherein said plurality of cutouts (5) are formed along said edge (32a) of said folded portion (32) in spaced apart relation to each other.

3. The joining structure as defined in claim 1 or 2, wherein said exterior portion (31) and said folded portion (32) are sewn together.
